# EUROPÄISCHE PATENTSCHRIFT

(11) **EP 2 878 773 B1**
(45) Veröffentlichungstag und Bekanntmachung des Hinweises auf die Patenterteilung: **19.04.2017**
(21) Anmeldenummer: 14188768.7
(22) Anmeldetag: 14.10.2014
(51) Int. Cl.: F01D 25/24

(54) **Gasturbine mit geschlitztem Fixierring**
Gas turbine with slotted retention ring
Turbine à gaz avec anneau fendu de fixation

(30) Priorität: 13.11.2013 DE 102013223133
(43) Veröffentlichungstag der Anmeldung: 03.06.2015
(73) Patentinhaber: MTU Aero Engines AG, 80995 München (DE)
(72) Erfinder: Stricker, Hans, 81245 München (DE); Rauscher, Stefan, 86551 Aichach (DE)

(56) Entgegenhaltungen:
- EP-A1- 0 513 956
- FR-A- 970 315
- GB-A- 2 152 170
- JP-A- H0 771 430
- US-A- 4 875 786
- US-A- 5 352 079
- US-A- 5 411 369
- US-A- 5 937 985
- US-A1- 2003 223 809
- US-A1- 2004 051 252

## Beschreibung

Die vorliegende Erfindung betrifft eine Gasturbine mit einer Leitschaufelanordnung und einem Fixierring zur axialen Fixierung der Leitschaufelanordnung sowie ein Verfahren zum Herstellen einer solchen Gasturbine.

Aus betriebsinterner Praxis ist es bekannt, Leitschaufelsegmente (sogenannte "vane cluster") gehäuseseitig einzuhängen. Um diese gegen ein Herausfallen zu sichern, werden die eingehängten Leitschaufelsegmente axial durch einen Fixierring gesichert, der hierzu so in eine Umfangsnut eingesetzt wird, dass ein radial innerer Teilabschnitt aus der Nut hervorragt und eine Stirnseite der Leitschaufelsegmente sichert.

Um den Fixierring in die Umfangsnut einzusetzen, wird dieser elastisch deformiert. Hierzu weist er einen durchgehenden Schlitz auf, dessen lichte Weite sich bei dieser elastischen Deformation verringert, wobei sich die radialen Stirnseiten überlappen können.

Dokument US 5 411 369 offenbart eine Gasturbine mit einer Leitschaufelanordnung und einem Fixierring mit einem durchgehenden Radialschlitz, der sich von dem radial äußeren Rand bis zu dem radial inneren Rand erstreckt und zwei gegenüberliegende Flanken aufweist, beide mit einen ebenen, radial äußeren Randabschnitt und einer Hinterschneidung, an welcher die Flanken in Umfangsrichtung bei einem Fortschreiten vom radial äußeren Rand zum radial inneren Rand zurückweichen.

Weitere geschlitzte Fixierringe zeigen die Dokumente FR 970 315, US 4 875 786 und JP 07071430.

Eine Aufgabe einer Ausführung der vorliegenden Erfindung ist es, eine verbesserte Gasturbine zur Verfügung zu stellen und/oder die Herstellung einer Gasturbine zu verbessern.

Diese Aufgabe wird durch eine Gasturbine mit den Merkmalen des Anspruchs 1 bzw. ein Verfahren mit den Merkmalen des Anspruchs 4 gelöst. Vorteilhafte Ausführungsformen der Erfindung sind Gegenstand der Unteransprüche.

Nach einem Aspekt der vorliegenden Erfindung weist eine Gasturbine, insbesondere eine Flugtriebwerk-Gasturbine, wenigstens eine Verdichter- oder Turbinenstufe mit wenigstens einer Leitschaufelanordnung auf. Die Leitschaufelanordnung weist in einer Ausführung mehrere in Umfangsrichtung nebeneinander angeordnete Leitschaufelsegmente auf, die in einer Weiterbildung jeweils eine oder mehrere Leitschaufeln bzw. Leitschaufelblätter zur Umlenkung einer Arbeitsströmung aufweisen. In einer Ausführung wird bzw. ist die Leitschaufelanordnung mit einem, insbesondere stromaufwärtigen, Flansch, insbesondere form- und/oder reibschlüssig, in eine gehäuseseitige Hinterschneidung der Gasturbine eingehängt.

Die Leitschaufelanordnung wird bzw. ist, insbesondere form- und/oder reibschlüssig, durch einen Fixierring axial fixiert. Unter einer axialen Fixierung wird vorliegend insbesondere eine Sicherung gegen ein Herausfallen der, insbesondere eingehängten, Leitschaufelanordnung verstanden. Der Fixierring stützt die Leitschaufelanordnung auch in Axialrichtung ab, insbesondere, wenn ein Rotor sich infolge eines Wellenbruchs seinerseits an der Leitschaufelanordnung in Axialrichtung abstützt. In einer Ausführung ist der Fixierring stromabwärts hinter der Leitschaufelanordnung angeordnet.

Der Fixierring weist, insbesondere in einem Axialschnitt senkrecht zu einer Drehachse der Gasturbine, einen radial äußeren Rand auf, der, insbesondere form- und/oder reibschlüssig, in einer gehäuseseitigen Umfangsnut angeordnet wird bzw. ist und sich entsprechend in einer Ausführung, wenigstens im Wesentlichem, in Umfangsrichtung erstreckt. Der Fixierring weist weiter einen gegenüberliegenden, radial inneren Rand auf, der außerhalb der Nut angeordnet wird bzw. ist, um die Leitschaufelanordnung, insbesondere form- und/oder reibschlüssig, axial zu fixieren, insbesondere eine, vorzugsweise stromabwärtige, Stirnseite der Leitschaufelanordnung, insbesondere form- und/oder reibschlüssig, zu kontaktieren.

Von dem radial äußeren Rand bis zu dem radial inneren Rand erstreckt sich ein durchgehender Radialschlitz. Dieser weist eine erste Flanke und eine zweite Flanke auf, die der ersten Flanke in Umfangsrichtung gegenüberliegt. Eine Flanke im Sinne der vorliegenden Erfindung bezeichnet entsprechend eine Stirnseite des geschlitzten Fixierringes in Umfangsrichtung.

Die erste Flanke weist in radialer Richtung gesehen eine Hinterschneidung auf. Hierunter wird verstanden, dass die erste Flanke in Umfangsrichtung zurückweicht, wenn man vom radial inneren Rand zum radial äußeren Rand fortschreitet. Mit anderen Worten weist die erste Flanke wenigstens einen Abschnitt auf, der gegenüber dem radial inneren Rand in Umfangsrichtung von dem Schlitz weg versetzt ist.

Durch die Hinterschneidung kann in einer Ausführung der Fixierring in vorteilhafter Weise aus der Nut entfernt werden. Hierzu wird die Hinterschneidung durch ein entsprechendes, insbesondere hakenartiges, Werkzeug hintergriffen und radial aus der Nut herausgezogen.

Die Hinterschneidung reicht bis zu dem radial äußeren Rand. Auf diese Weise kann sie in einer Ausführung in vorteilhafter Weise gefertigt werden.

In einer anderen Weiterbildung kann der Abschnitt als Schräge ausgebildet sein, die mit dem radial äußeren Rand einen Winkel von wenigstens 110° einschließt. Ein solcher Abschnitt der ersten Flanke bzw. eine solche Hinterschneidung kann insbesondere durch eine schräge bzw. gegen die radiale Richtung geneigte Schlitzung des Fixierringes ausgebildet werden bzw. sein.

Die erste Flanke weist einen radial inneren Randabschnitt auf, der mit dem radial inneren Rand einen Winkel von wenigstens 50° einschließt.

Hierdurch kann in einer Ausführung ein unerwünschtes selbsttätiges Ausschieben bzw. Herausarbeiten des Fixierringes reduziert, vorzugsweise verhindert werden, wenn dieser im Betrieb, beispielsweise vibrations- und/oder strömungstechnisch bedingt, in Umfangsrichtung wandert und dabei der radial innere Randabschnitt der ersten Flanke auf einer Kante der Leitschaufelanordnung, insbesondere einem in Umfangsrichtung benachbarten Leitschaufelsegment, aufläuft. Unter einem radial inneren Randabschnitt wird insbesondere ein Abschnitt der ersten Flanke verstanden, der sich von dem radial inneren Rand ausgehend radial nach außen erstreckt. Der radial innere Randabschnitt ist, wenigstens im Wesentlichen, eben und erstreckt sich bis zu der Hinterschneidung. So bilden also der radial innere Randabschnitt und die Hinterschneidung gemeinsam die gesamte erste Flanke, die einen Knick bzw. zwei gegeneinander geneigte Schrägen aufweist.

Indem der radial innere Randabschnitt mit dem radial inneren Rand einen Winkel von wenigstens 50° einschließt, kann in einer Ausführung ein Ausschieben infolge eines Auflaufens des Randabschnittes reduziert, vorzugsweise verhindert werden.

In einer Ausführung schließt der radial innere Randabschnitt mit dem radial inneren Rand einen Winkel von wenigstens 60°, insbesondere von wenigstens 70°, vorzugsweise von wenigstens 85°, insbesondere wenigstens 110° ein. Insbesondere bei üblichen Materialpaarungen kann hierdurch in einer Ausführung vorteilhaft eine mechanische Selbsthemmung eines Ausschiebens infolge eines Auflaufens des Randabschnittes erreicht werden.

Insbesondere kann der radial innere Randabschnitt mit dem radial inneren Rand einen Winkel von, wenigstens im Wesentlichen, 90° einschließen bzw. sich in radialer Richtung erstrecken. Ein solcher radial innerer Randabschnitt der ersten Flanke kann insbesondere durch eine radiale Teilschlitzung des Fixierringes ausgebildet werden bzw. sein. Wenn die Schlitzung, insbesondere die Hinterschneidung, in einer Ausführung als schräge bzw. gegen die radiale Richtung geneigte Schlitzung des Fixierringes ausgebildet wird bzw. ist, kann ein entsprechend geneigter, insbesondere wenigstens im Wesentlichen radialer radial innerer Randabschnitt in einer Ausführung durch ein anschließendes, insbesondere spanendes, schneidendes und/oder, insbesondere thermisches abtragendes, Entfernen eines radial inneren Flankenbereichs ausgebildet werden bzw. sein, insbesondere durch Fräsen, Schleifen, Stanzen, Erodieren oder dergleichen.

Die zweite Flanke ist, wenigstens im Wesentlichen, eben und parallel zu der Schräge der Hinterschneidung der ersten Flanke ausgebildet. Hierdurch kann in einer Ausführung die Hinterschneidung in vorteilhafter Weise durch eine durchgehende schräge Schlitzung ausgebildet werden bzw. sein.

Ein Aspekt der vorliegenden Erfindung betrifft ein Verfahren zum Herstellen einer Gasturbine, wie sie vorstehend erläutert wurde, bzw. eine Gasturbine, die nach einem solchen Verfahren hergestellt wird bzw. ist. Unter einem Herstellen wird vorliegend insbesondere ein (erstmaliges) Herstellen einer (neuen) Gasturbine verstanden. Gleichermaßen wird unter einem Herstellen vorliegend auch ein (erneutes) Wiederherstellen einer vorhandenen Gasturbine, insbesondere eine Wiedermontage zu Wartungs- und/oder Reparaturzwecken verstanden.

Ein solches erstmaliges oder Wiederherstellen umfasst das Einsetzen des hierzu elastisch deformierten Fixierringes in die Nut unter Verringerung der lichten Weite des Schlitzes. Der in die Nut eingesetzte Fixierring kann sich in einer Ausführung anschließend unter entsprechender Vergrößerung der lichten Weite des Schlitzes, wenigstens teilweise, in Umfangsrichtung entspannen, vorzugsweise bis zu einer vollständigen Anlage in der Nut.

In einer Ausführung wird, insbesondere zunächst, die Hinterschneidung ausgebildet, und, insbesondere anschließend, der radial innere Randabschnitt ausgebildet. Die Hinterschneidung und/oder der radial innere Randabschnitt können insbesondere spanend, schneidend und/oder, insbesondere thermisch, abtragend ausgebildet werden bzw. sein, insbesondere durch Fräsen, Schleifen, Stanzen, Erodieren oder dergleichen. Wie vorstehend erläutert, kann nach einem Aspekt der vorliegenden Erfindung zunächst eine schräge Schlitzung ausgebildet werden, wobei anschließend eine radial innere Spitze, wenigstens teilweise, insbesondere durch eine radiale Einfräsung oder dergleichen, abgetragen wird. Insbesondere auf diese Weise kann ein Schlitz in vorteilhafter Weise ausgebildet werden, der einerseits ein Entfernen des Fixierringes durch Hintergreifen der Hinterschneidung ermöglicht und zugleich ein unerwünschtes Herausarbeiten infolge einer Wanderung des Fixierringes in Umfangsrichtung in der Nut reduziert, vorzugsweise verhindert.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil einer Gasturbine nach einer Ausführung der vorliegenden Erfindung in einem Meridianschnitt ; und
- Fig. 2: einen Schnitt längs der Linie II-II in Fig. 1.

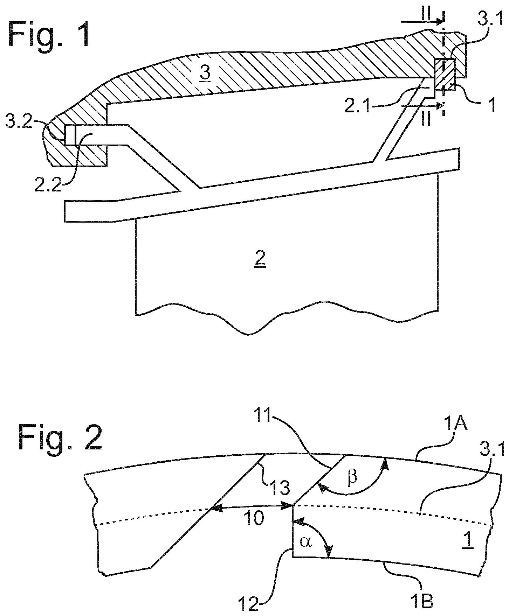

Fig. 1 zeigt einen Teil einer Flugtriebwerk-Gasturbine nach einer Ausführung der vorliegenden Erfindung in einem Meridianschnitt mit einem (nur teilweise dargestellten) Gehäuse 3 und einer Leitschaufelanordnung mit mehreren in Umfangsrichtung nebeneinander angeordnete Leitschaufelsegmenten 2, von denen eines in Fig. 1 teilweise dargestellt ist. Dieses ist mit einem stromaufwärtigen (links in Fig. 1) Flansch 2.2 in eine gehäuseseitige Hinterschneidung 3.2 der Gasturbine eingehängt.

An einem gegenüberliegenden Flansch 2.1 wird bzw. ist die Leitschaufelanordnung durch einen stromabwärts hinter der Leitschaufelanordnung (rechts in Fig. 1) angeordneten Fixierring 1 axial fixiert, insbesondere gegen ein Herausfallen gesichert und, insbesondere, bei einem Wellenbruch in Axialrichtung abgestützt.

Der Fixierring weist, wie insbesondere in dem Axialschnitt der Fig. 2 längs der Linie II-II in Fig. 1 erkennbar, einen radial äußeren Rand 1A auf, der in einer gehäuseseitigen Umfangsnut 3.1 angeordnet wird bzw. ist und sich in Umfangsrichtung (von links nach rechts in Fig. 2) erstreckt. Der Fixierring weist weiter einen gegenüberliegenden, radial inneren Rand 1B auf, der außerhalb der Nut 3.1 (deren radial innerer Rand in Fig. 2 strichliert angedeutet ist) angeordnet wird bzw. ist, um eine stromabwärtige Stirnseite des Flanschs 2.1 der Leitschaufelanordnung axial zu fixieren.

Von dem radial äußeren Rand bis zu dem radial inneren Rand erstreckt sich ein durchgehender Radialschlitz 10. Dieser weist eine erste Flanke (rechts in Fig. 2) und eine zweite Flanke (links in Fig. 2) auf, die der ersten Flanke in Umfangsrichtung gegenüberliegt.

Die erste Flanke weist in radialer Richtung gesehen (von unten nach oben in Fig. 2) eine Hinterschneidung 11 auf. Man erkennt in Fig. 2, dass die erste Flanke in Umfangsrichtung zurückweicht (nach rechts in Fig. 2), wenn man vom radial inneren Rand zum radial äußeren Rand fortschreitet.

Durch die Hinterschneidung 11 kann der Fixierring in vorteilhafter Weise aus der Nut entfernt werden. Hierzu wird die Hinterschneidung durch ein entsprechendes, insbesondere hakenartiges, Werkzeug hintergriffen und radial aus der Nut herausgezogen (nicht dargestellt).

Die Hinterschneidung reicht bis zu dem radial äußeren Rand und wird durch einen ebenen, radial äußeren Randabschnitt 11 der ersten Flanke gebildet. Der Randabschnitt 11 schließt mit dem radial äußeren Rand einen Winkel β von etwa 135° ein bzw. ist als Schräge 11 der ersten Flanke ausgebildet.

Die erste Flanke weist weiter einen radial inneren Randabschnitt 12 auf, der mit dem radial inneren Rand einen Winkel α von 90° einschließt.

Hierdurch kann ein unerwünschtes selbsttätiges Ausschieben bzw. Herausarbeiten des Fixierringes reduziert, vorzugsweise verhindert werden, wenn dieser im Betrieb, beispielsweise vibrations- und/oder strömungstechnisch bedingt, in Umfangsrichtung wandert und dabei der radial innere Randabschnitt der ersten Flanke auf einer Kante der Leitschaufelanordnung, insbesondere einem in Umfangsrichtung benachbarten Leitschaufelsegment, aufläuft.

Der radial innere Randabschnitt 12 erstreckt sich von dem radial inneren Rand ausgehend radial nach außen. Er ist eben und erstreckt sich bis zu der Hinterschneidung bzw. Schräge 11, mit der gemeinsam er die gesamte erste Flanke bildet, die somit einen Knick aufweist bzw. aus zwei gegeneinander geneigten Schrägen 11, 12 besteht.

Die zweite Flanke 13 ist durchgehend eben und parallel zu der Schräge der Hinterschneidung 11 der ersten Flanke ausgebildet.

Zur Herstellung des Fixierringes 1 wird zunächst spanend eine schräge Schlitzung ausgebildet, die die zweite Flanke 13 und die Hinterschneidung 11 definiert. Anschließend wird eine dabei verbleibende radial innere Spitze der ersten Flanke durch eine radiale Einfräsung entfernt, so dass sich der radial innere Randabschnitt 12 ergibt, der mit dem radial inneren Rand 1B den Winkel α einschließt.

Auf diese Weise kann der Schlitz 10 in fertigungstechnisch einfacher Weise ausgebildet werden, der einerseits ein Entfernen des Fixierringes durch Hintergreifen der Hinterschneidung 11 ermöglicht und zugleich ein unerwünschtes Herausarbeiten infolge einer Wanderung des Fixierringes in Umfangsrichtung in der Nut verhindert.

Anschließend kann, insbesondere bei einer Neuherstellung oder einer Wartung oder Reparatur, der hierzu elastisch deformierte Fixierring 1 in die Nut 3.1 unter Verringerung der lichten Weite des Schlitzes 10 eingesetzt werden, wie dies in Fig. 1 angedeutet ist. Dabei können die einander gegenüberliegenden Stirnseiten bzw. Flanken des Schlitzes sich in Umfangsrichtung überlagern.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Fixierring
- 1A/B: radial äußerer/innerer Rand
- 2: Leitschaufelsegment/-anordnung
- 2.1,2.2: Flansch
- 3: Gehäuse
- 3.1: Nut
- 3.2: Hinterschneidung im Gehäuse
- 10: Schlitz
- 11: Hinterschneidung der ersten Flanke des Schlitzes
- 12: radial innerer Randabschnitt der ersten Flanke des Schlitzes
- 13: zweite Flanke des Schlitzes

## Patentansprüche

1. Gasturbine mit einer Leitschaufelanordnung (2) und einem Fixierring (1), der einen radial äußeren Rand (1A), einen radial inneren Rand (1B) und einen durchgehenden Radialschlitz (10) aufweist, der sich von dem radial äußeren Rand (1A) bis zu dem radial inneren Rand (1B) erstreckt und eine erste Flanke mit einem, wenigstens im Wesentlichen, eben radial inneren Randabschnitt (12) und einer, wenigstens im Wesentlichen, ebenen Hinterschneidung (11), an welcher die erste Flanke in Umfangsrichtung bei einem Fortschreiten vom radial inneren Rand (1B) zum radial äußeren Rand (1A) zurückweicht, sowie eine der ersten Flanke in Umfangsrichtung gegenüberliegende zweite Flanke (13), die, wenigstens im Wesentlichen, eben und parallel zu der Hinterschneidung (11) der ersten Flanke ausgebildet ist, aufweist,
wobei sich der radial innere Randabschnitt (12) bis zur Hinterschneidung (11) erstreckt, so dass der radial innere Randabschnitt (12) und die Hinterschneidung (11) gemeinsam die gesamte erste Flanke bilden, die entsprechend einen Knick aufweist,
und wobei der radial innere Randabschnitt mit dem radial inneren Rand einen Winkel (α) von wenigstens 50° einschließt,
wobei der radial äußere Rand (1A) in einer gehäuseseitigen Nut (3.1) angeordnet ist und der radial innere Rand (1B) außerhalb der Nut (3.1) angeordnet ist, so dass der Fixierring (1) die Leitschaufelanordnung (2) in Axialrichtung fixiert und abstützt.

2. Gasturbine nach dem der vorhergehenden Anspruch, **dadurch gekennzeichnet, dass** der radial innere Randabschnitt mit dem radial inneren Rand einen Winkel (α) von wenigstens 85° einschließt.

3. Gasturbine nach einem der vorhergehenden Ansprüche, **dadurch gekennzeichnet, dass** die Hinterschneidung eine Schräge (11) aufweist, die mit dem radial äußeren Rand einen Winkel (β) von wenigstens 110° einschließt.

4. Verfahren zum Herstellen einer Gasturbine nach einem der vorhergehenden Ansprüche, **gekennzeichnet durch** den Schritt:
Einsetzen des elastisch deformierten Fixierringes (1) in die Nut (3.1) unter Verringerung der lichten Weite des Schlitzes.

5. Verfahren nach dem vorhergehenden Anspruch, **gekennzeichnet durch** die Schritte:
Ausbilden der Hinterschneidung (11); und
Ausbilden des radial inneren Randabschnitts (12).

6. Verfahren nach dem vorhergehenden Anspruch, **dadurch gekennzeichnet, dass** die Hinterschneidung und der radial innere Randabschnitt spanend, schneidend und/oder, insbesondere thermisch, abtragend ausgebildet werden.

## Claims

1. A gas turbine comprising a guide vane arrangement (2) and a fixing ring (1) having a radially outer rim (1A), a radially inner rim (1 B) and a radial slot (10), which extends from the radially outer rim (1A) through to the radially inner rim (1B) and has a first flank having an at least substantially planar radially inner rim portion (12) and an at least substantially planar undercut (11), on which the first flank recedes in the circumferential direction as it proceeds from the radially inner rim (1 B) to the radially outer rim (1A), as well as a second flank (13), which lies opposite the first flank in the circumferential direction and is at least substantially planar and parallel to the undercut (11) of the first flank,
wherein the radially inner rim portion (12) extends as far as the undercut (11), so that the radially inner rim portion (12) and the undercut (11) together form the entire first flank, which accordingly has a kink, and wherein the radially inner rim portion encloses an angle (α) of at least 50° with the radially inner rim,
wherein the radially outer rim (1A) is arranged in a housing-side groove (3.1) and the radially inner rim (1B) is arranged outside the groove (3.1),
so that the fixing ring (1) fixes and supports the guide vane arrangement (2) in the axial direction.

2. The gas turbine according to the preceding claim, **characterized in that** the radially inner rim portion encloses an angle (α) of at least 85° with the radially inner rim.

3. The gas turbine according to one of the preceding claims, **characterized in that** the undercut has a slope (11) which encloses an angle (ß) of at least 110° with the radially outer rim.

4. A method for producing a gas turbine according to one of the preceding claims, **characterized by** the step of:
inserting the elastically deformed fixing ring (1) into the groove (3.1) while reducing the internal width of the slot.

5. The method according to the preceding claim, **characterized by** the steps of:
forming the undercut (11); and
forming the radially inner rim portion (12).

6. The method according the preceding claim, **characterized in that** the undercut and the radially inner rim portion are formed by machining, cutting and/or, in particular, thermal removal.

## Revendications

1. Turbine à gaz avec un agencement d'aubes directrices (2) et un anneau de fixation (1) qui présente un bord radialement
extérieur (1A), un bord radialement intérieur (1 B) et une fente radiale continue (10) qui s'étend depuis le bord radicalement extérieur (1A) jusqu'au bord radialement intérieur (1 B) et présente un premier flanc avec une section de bord (12) au moins sensiblement radialement intérieure plane, et une contre-dépouille (11) au moins sensiblement plane, sur laquelle le premier flanc recule dans le sens périphérique lors d'une progression du bord radialement intérieur (1 B) au bord radialement extérieur (1A), ainsi qu'un second flanc (13) en regard du premier flanc dans le sens périphérique qui est réalisé au moins sensiblement plan et parallèle à la contre-dépouille (11) du premier flanc,
dans laquelle la section de bord radialement intérieure (12) s'étend jusqu'à la contre-dépouille (11) de sorte que la section de bord radialement intérieure (12) et la contre-dépouille (11) forment ensemble le premier flanc entier qui présente par conséquent un coude,
et dans lequel la section de bord radialement intérieure forme avec le bord radialement intérieur un angle (α) d'au moins 50°,
dans lequel le bord (1A) radialement extérieur est agencé dans une rainure (3.1) côté boîtier et le bord radialement intérieur (1 B) est agencé en dehors de la rainure (3.1) de sorte que l'anneau de fixation (1) fixe et appuie l'agencement d'aubes directrices (2) dans le sens axial.

2. Turbine à gaz selon la revendication précédente, **caractérisée en ce que** la section de bord radialement intérieure forme avec le bord radialement intérieur un angle (α) d'au moins 85°,

3. Turbine à gaz selon l'une des revendications précédentes, **caractérisée en ce que** la contre-dépouille présente un biais (11) qui forme avec le bord radialement extérieur un angle (β) d'au moins 110°.

4. Procédé de fabrication d'une turbine à gaz selon l'une des revendications précédentes, **caractérisé par** l'étape de :
l'insertion de l'anneau de fixation (1) déformé élastiquement dans la rainure (3.1) en réduisant la largeur intérieure de la fente.

5. Procédé selon la revendication précédente, **caractérisé par** les étapes :
la réalisation de la contre-dépouille (11) ; et
la réalisation de la section de bord radialement intérieure (12).

6. Procédé selon la revendication précédente, **caractérisé en ce que** la contre-dépouille et la section de bord radialement intérieure sont réalisées par enlèvement de copeaux, découpe et/ou enlèvement, en particulier par voie thermique.
